# EUROPEAN PATENT APPLICATION

(11) **EP 1 944 694 A2**
(43) Date of publication of application: **16.07.2008**
(21) Application number: 07121583.4
(22) Date of filing: 27.11.2007
(51) Int. Cl.: G06F 11/273

(54) **Test interface for software-based sequence of event recording systems**

(30) Priority: 03.12.2006 US 566224
(71) Applicant: GE Fanuc Automation Americas, Inc., Charlottesville, VA 22911 (US)
(72) Inventor: Lobuono, Mark Anthony, South Lyon, MI 48178 (US)
(74) Representative: Bedford, Grant Richard

(57) **Abstract**

A method for verifying the reliability and robustness of sequence of event recorders 100 includes transmitting a number of precise signals 60 to a software based sequence of event recorder, detecting and recording a number of voltage changes and comparing the number of precise signals 60 against the number of voltage changes.

## Description

This invention relates generally to the testing and verification of sequence of Event recording systems, and more particularly, to testing and verification of software based sequence of event recording systems

Known sequence of event recorders generally include at least a memory and a controller, such as a programmable logic controller, and are used to record events during system processing. For example, events may be recorded during a manufacturing process or a power system process.

Generally external hardware or electronic modules are used to detect and record sequence of event recorder input channel state changes. Known external hardware and electronic modules that are used to verify the accurate functionality of sequence of event recorders may be expensive and may increase the total cost of these recorders. Furthermore, most known sequence of event recording systems use specially designed hardware modules to perform signal detection which may also contribute to increased costs.

Some known sequence of event recording systems use software to detect and record input channel state changes. However, known software based sequence of event recording systems are generally perceived by consumers as being unreliable and insufficiently robust for manufacturing and power systems applications. Additionally, both software based and hardware based sequence of event recording systems are limited to a relatively small number of inputs ranging from 16 to 32 inputs.

In one aspect according to the present invention, a method for verifying the reliability and robustness of sequence of event recorders is provided. The method includes transmitting a number of precise signals to a software based sequence of event recorder, detecting and recording a number of voltage changes and comparing the number of precise signals against the number of voltage changes.

In another aspect, a sequence of event test interface includes a circuit comprising a plurality of electronic devices and a plurality of programs. When executed each of the plurality of programs causes the circuit to generate a number of precise signals having one millisecond between output channels.

In yet another aspect, a sequence of event recorder testing system for verifying proper functioning and synchronization of a sequence of event recorder is provided. The system includes a circuit comprising a plurality of electronic devices and a plurality of programs, and a sequence of event recorder including a controller and a memory. The sequence of event recorder is coupled to the circuit such that when one of the plurality of programs is selected a time stamp database is defined.

Various aspects and embodiments of the present invention will now be described in connection with the accompanying drawings, in which:
Figure 1 is a schematic diagram of an exemplary electronic circuit;
Figure 2 is a block diagram illustrating sequence of event recorder control logic for use with the electronic circuit of Figure 1;
Figure 3 is a block diagram detailing the memory of Figure 2; and
Figure 4 is a flowchart illustrating an exemplary method of using a sequence of event test interface to create a time stamp database.

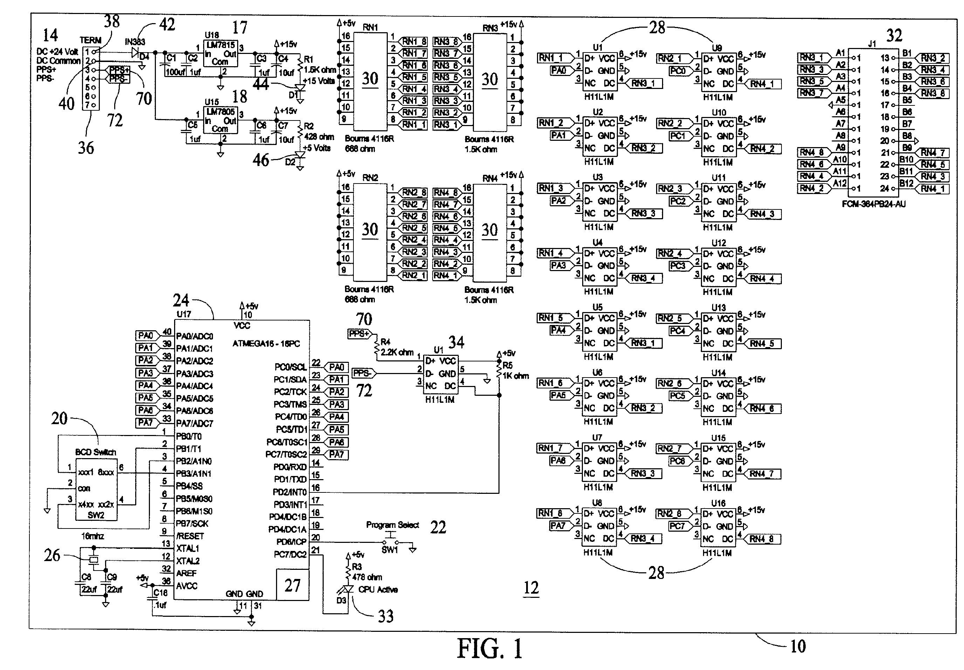

Figure 1 is a schematic diagram of an exemplary electronic circuit also known as a sequence of event (SOE) test interface 10. In the exemplary embodiment, SOE test interface 10 includes a printed circuit board (PCB) 12 having a plurality of electronic devices mounted thereon. More specifically, SOE test interface 10 includes a power source 14, a first voltage regulator 17, a second voltage regulator 18, a switch 20, a pushbutton switch 22, a microprocessor 24, a 16-megahertz AT cut crystal 26, a plurality of CMOS opto-isolators 28, a plurality of resistor networks 30, a connector 32, an LED 33 and another opto-isolator 34.

In the exemplary embodiment, power source 14 is a 24-volt power source connected to a terminal block 36 mounted on PCB 12. Terminal block 36 is an insulating base having eight terminals for connecting to other electronic devices using electrically conducting wires. Power source 14 includes two wires, one wire coupled to terminal 38 of terminal block 36 and another wire coupled to terminal 40 of terminal block 36. Coupling power source 14 to terminals 38 and 40 provides power to SOE test interface 10 and provides reverse polarity diode protection through diode 42. It should be appreciated that power source 14 may be any power source capable of enabling SOE test interface 10 to function as described herein.

In the exemplary embodiment, first and second voltage regulators 17 and 18, respectively, may be any voltage regulator well known to one of ordinary skill in the art that enables SOE test interface 10 to function as described herein. Additionally, first and second voltage regulators 17 and 18 each include green light emitting diodes (LED) 44 and 46, respectively. First and second voltage regulators 17 and 18 function to provide regulated voltage of + 15 volts and +5 volts, respectively.

In the exemplary embodiment, switch 20 is a rotary BCD switch and switch 22 is a SPST pushbutton switch. Switch 20 functions to select a program from a plurality of programs, and switch 22 functions to enter a new program selection and activate microprocessor 24. It should be appreciated that in other embodiments, switches 20 and 22 may be any type of switch that enables SOE test interface 10 to function as described herein.

In the exemplary embodiment, microprocessor 24 may include any programmable system including systems using microcontrollers, reduced instruction set computrers (RISC), application specific integrated circuits (ASICs), logic circuits, and any other circuit or processor capable of executing the functions described herein. Microprocessor 24 may, for example, be an ATMEL ATMEGA16-16PC RISC microprocessor. The above examples are exemplary only, and are thus not intended to limit in any way the definition and/or meaning of the term "microprocessor". It should be appreciated that microprocessor 24 includes a non-volatile memory portion 27 for storing programs executed by SOE test interface 10 and also generally controls SOE test interface 10. It should also be appreciated that 16-megahertz AT cut crystal 26 provides the oscillator frequency for microprocessor 24 and may have any frequency that enables SOE test interface 10 to function as described herein.

CMOS opto-isolators 28 are devices that include a light emitting diode (not shown) and a photo-detector (not shown) and function to couple signals without using an electrical connection. In the exemplary embodiment, opto-isolators 28 may be any opto-isolator that is well known to one of ordinary skill in the art and enables SOE test interface 10 to function as described herein. Opto-isolators 28 function as signal switches for a plurality of output channels (not shown). More specifically, each opto-isolator 28 functions as a switch for a corresponding output channel. In the exemplary embodiment, sixteen opto-isolators 28 are included in the SOE test interface 10, thus up to sixteen corresponding outlet channels may be controlled simultaneously. It should be appreciated that although the exemplary embodiment is described using sixteen opto-isolators 28, other embodiments may use any number of opto-isolators 28 that enable SOE test interface 10 to function as described herein.

In the exemplary embodiment, resistor networks 30 each include a plurality of resistors (not shown) and function as signal pull-ups for opto-isolators 28.

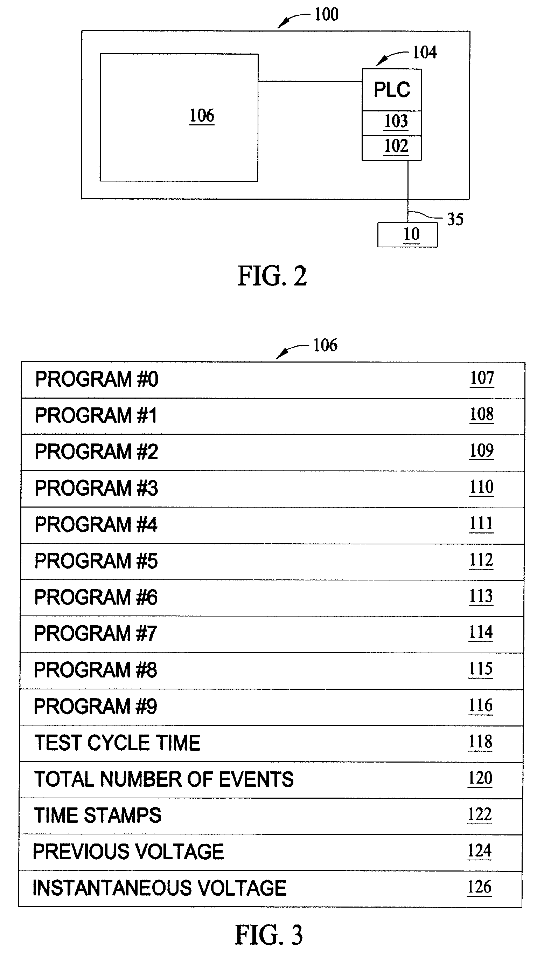

In the exemplary embodiment, connector 32 is a 24-pin connector for coupling SOE test interface 10 to a Sequence of Event Recorder (SER) 100 (shown in Figure 2). It should be appreciated that although the exemplary embodiment is described as including a 24-pin connector 32, other embodiments may use a connector 32 having any number of pins that enables SOE test interface 10 to function as described herein.

In the exemplary embodiment, LED 33 may be any LED that allows SOE test interface 10 to function as described herein. LED 33 continuously flashes periodically during operation of SOE test interface 10, thus verifying that test interface 10 is operating properly.

In the exemplary embodiment, a GE Fanuc input module 35 is used for coupling SER 100 to connector 32. It should be appreciated that although the exemplary embodiment is described using input module 35, other embodiments may use any kind of multiconductor signal cable between SER 100 and connector 32 that enables SOE test interface 10 to function as described herein. Further, it should be appreciated that using multi-conductor cables eliminates the need for individual signal wiring.

In the exemplary embodiment, non-volatile memory portion 27 of microprocessor 24 contains a plurality of exemplary programs 58 that cause SOE test interface 10 to generate waveforms 60 that simulate operation of a real world control system (not shown). In the exemplary embodiment, the control system may be a series of processes used in manufacturing or used in power plants for power generation. It should be appreciated that other embodiments may use any program 58 and waveform 60 appropriate for simulating any kind of system or process.

Each of the plurality of programs 58 is different and causes SOE test interface 10 to generate a corresponding waveform 60. More specifically, as shown in Table 1 below, ten programs 58 are available for selection that cause SOE test interface 10 to generate a variety of waveform frequencies and pulse widths.

SOE test interface 10 generates voltages that facilitate defining very precise test signals at known and measurable frequencies to allow counting of the signal transitions by standard frequency counters (not shown). More specifically, SOE test interface 10 generates precise test signals having one millisecond (0.001) separation between output channels. For example, using program 58 designated as number 6 in Table 1, precise test waveforms 60 are generated that offset each output channel by one millisecond from each other. The offsets are from output channel 1 at an 80% positive duty cycle and through output channel 16 at a 95% duty cycle.

The test signals are generated as a constant stream of discrete voltages, thus defining waveforms 60. Waveforms 60 may vary from 10 Hz to 250 Hz and have pulse frequency stability to +/- 2 microseconds. The test signals are generated over a predetermined time period called a test cycle. A test cycle is defined as the length of time SOE test interface 10 operates during a test. It should be understood that test cycles may vary in duration and may include time periods, such as, but not limited to, minutes, hours, days or weeks. It should be appreciated that the test signals, or output voltages, vary from 0 to 15 volts and each voltage change is known as a state change or an event. Further, it should be appreciated that a state change, or event, is defined as occurring for both positive and negative voltage changes.

As illustrated below in Table 1, each program 58 generates a waveform 60 having a duty cycle 62, an active output number 64 and a number of events per second 66. Active output number 64 represents the number of output channels that are active for a given program 58. Events per second 66 represents the number of times the voltage changes each second for a given program 58. It should be appreciated that although the exemplary embodiment describes ten (i.e. 0-9) different programs 58 and corresponding waveforms 60, other embodiments may use any number of programs 58 that enable SOE test interface 10 to function as described herein.

**TABLE 1**

| Prog. No. | Freq. | Duty Cycle | Active Output No. | Events per Second |
|---|---|---|---|---|
| 0 | 10 | 50% | 1 | 10 |
| 1 | 100 | 50% | 1 | 100 |
| 2 | 10 | 3% | 1 | 10 |
| 3 | 10 | 97% | 1 | 10 |
| 4 | 10 | 97% | 1-16 | 160 |
| 5 | 100 | 70% | 1-16 | 1600 |
| 6 | 10 | 80%-95% | 1-16 Step Each 1ms | 160 |
| 7 | 10 | 95%-80% | 1-16 Step Each 1ms | 160 |
| 8 | 250 | 75% | 1-16 | 4000 |
| 9 | External Sync. | External Sync. | External Sync. | External Sync. |

Although each waveform 60 is different, it should be understood that each waveform 60 is periodic, or repetitive. Thus, each program 58 causes SOE test interface 10 to generate a constant stream of periodic waveforms 60. The periodicity characteristic of waveforms 60 facilitates detecting and recording events. However, non-periodic waveforms do not facilitate detecting and recording events. Thus, programs 58 cause SOE test interface 10 to generate only periodic waveforms 60.

Opto-isolator 34 is electrically coupled to terminals 70 and 72 of terminal block 36, and facilitates applying external synchronization signals to drive the output channels. In the exemplary embodiment, opto-isolator 34 facilitates allowing a maximum of eight SOE test interfaces 10 to be driven by the same synchronization signal and control up to one hundred twenty eight output channels from the same signal source. More specifically, selecting program 58 designated as number 9 from Table 1 allows using an external test signal, or waveform 60, from a global positioning system (GPS) satellite to drive a plurality of SOE test interfaces 10. GPS waveforms 60 are generally 1 pulse/second, are very precise with regard to absolute time, and have position and time functions built-in. In the exemplary embodiment, eight SOE test interfaces 10 may be simultaneously driven by GPS waveform 60. Because each SOE test interface 10 may control up to 16 outlet channels, up to 128 outlet channels may be simultaneously controlled using a single GPS signal. It should be appreciated that response time for output signal activation is less than four microseconds from receipt of the input synchronization signal.

Figure 2 is a block diagram illustrating an example of a known software-based sequence of event recorder (SER) 100 for use with SOE test interface 10 to verify synchronization of SER 100. Known software-based SER 100's generally include at least a memory 106 a programmable logic controller (PLC) 104 and a software application 103. In the exemplary embodiment, PLC 104 includes software application 103. It should be appreciated that although the exemplary embodiment describes PLC 104 including software application 103, other embodiments of SER 100 may configure PLC 104 and software application 103 separately or in any other configuration that enables SER 100 to function as described herein. Further, it should be understood that SER 100 may be any kind of device for recording events that occur during system processing. It should be appreciated that although the exemplary embodiment is described as including one SOE test interface 10, other embodiments may use any number of SOE test interfaces 10 that enable verifying synchronization of SER 100.

Figure 3 is a schematic diagram illustrating memory 106. Memory 106 may include predetermined program portions 107-116, a test cycle time portion 118, a total number of events portion 120, a time stamp portion 122, a previous voltage portion 124 and an instantaneous voltage portion 126. Predetermined program portions 107-116 correspond to the ten (i.e. No. 0-9) programs 58, respectively. Each predetermined program portion 107-116 stores a predetermined value representing the number of events per second that should be generated by each respective program 58. Portion 118 stores the test cycle time in seconds. The total number of events portion 120 stores the total number of voltage changes that occur during a given test cycle. Time stamp portion 122 stores a time stamp for each event.

Memory 106 can be implemented using any appropriate combination of alterable, volatile or non-volatile memory or non-alterable, or fixed, memory. The alterable memory, whether volatile or non-volatile, can be implemented using any one or more of static or dynamic RAM (Random Access Memory), a floppy disk and disk drive, a writeable or re-writeable optical disk and disk drive, a hard drive, flash memory or the like. Similarly, the non-alterable or fixed memory can be implemented using any one or more of ROM (Read-Only Memory), PROM (Programmable Read-Only Memory), EPROM (Erasable Programmable Read-Only Memory), EEPROM (Electrically Erasable Programmable Read-Only Memory), an optical ROM disk, such as a CD-ROM or DVD-ROM disk, and disk drive or the like.

In the exemplary embodiment, PLC 104 includes an input circuit 102 that receives signals transmitted to SER 100 from signal sources, such as SOE test interface 10. More specifically, PLC 104 receives precise test signals generated by SOE test interface 10 at input circuit 102 and determines whether an event has occurred, and if so, assigns a time stamp to the event. PLC 104 also stores each time stamp in time stamp portion 122 of memory 106. Furthermore, PLC 104 counts the number of events that occur during a test and stores the total count in the total number of events portion 120 of memory 106. Moreover, PLC 104 compares the total number of events generated during a test cycle against a predetermined number of events for the test cycle. In so doing, PLC 104 verifies the exact number of events that should have been detected and recorded during a test cycle.

Software application 103 of PLC 104 provides a robust and reliable method for detecting and recording input channel state changes, or events, without using external hardware or electronic modules to detect and record events. Software application 103 stores a time stamp for each event in time stamp portion 122 of memory 106. More specifically, software application 103 stores a date and time to within one millisecond of accuracy, for each event. By storing time stamps for each event in the time stamp portion 122 of memory 106, time stamp portion 122 constitutes a database containing a large number of time stamps. These time stamps facilitate defining timing relationships between individual events that may be used to determine whether a particular SER 100 is properly sychronized.

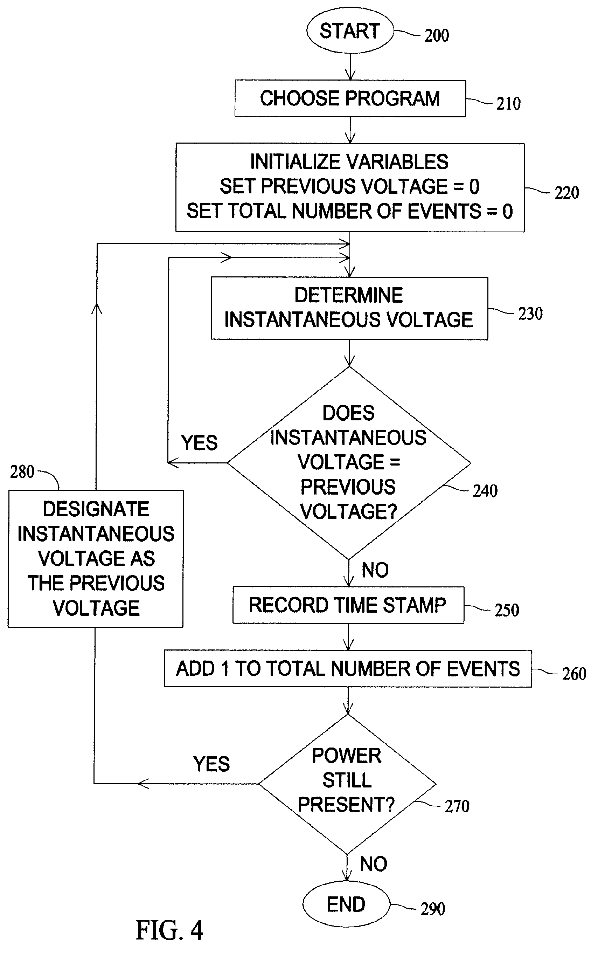

Figure 4 is a flowchart illustrating an exemplary method for testing a SER 100 over one test cycle. Operation starts at step 200. At step 200 input module 35 is coupled to and between connector 32 of SOE test interface 10 and SER 100, power source 14 is coupled to terminal block 36 and a test cycle time is determined. Operation then continues to step 210.

At step 210, using switch 20, one of the ten (i.e. No. 0-9) programs 58 from table 1 is selected to simulate a system or process. Pushbutton switch 22 is pressed once to execute the selected program 58. Operation then proceeds to step 220.

At step 220, parameters are initialized. More specifically, a parameter designated as the previous voltage is initially set to zero and is stored in previous voltage portion 124 of memory 106. Likewise, a parameter designated as the total number of events is initially set to zero and is stored in the total number of events portion of memory 106. During execution of selected program 58, SOE test interface 10 generates precision waveform 60. It should be understood that during execution of selected program 58, LED 33 continuously flashes periodically to indicate normal execution of selected program 58. Further, it should be understood that when program 58 designated as number 9 in Table 1 is selected, LED 33 flashes at the rate of the pulse per second (PPS) input signal. Operation then proceeds to step 230.

At step 230, PLC 104 determines an instantaneous voltage of precision waveform 60 and stores that instantaneous voltage in the instantaneous voltage portion 126 of memory 106. Then, at step 240, PLC 104 determines whether a voltage change has occurred. More specifically, PLC 104 determines whether the instantaneous voltage equals the previous voltage by comparing the instantaneous voltage of waveform 60 against the previous voltage. If the two voltages are equal, operation proceeds to step 230 where another instantaneous voltage is determined. Otherwise, operation proceeds to step 250.

At step 250, SER software application 103 contained in PLC 104 determines a time stamp that is stored as a record in the time stamp portion 122 of memory 106. After storing the time stamp, operation proceeds to step 260, where PLC 104 adds one to the total number of events. Operation then proceeds to step 270.

At step 270, a decision is made by PLC 104 regarding whether voltage monitoring should continue. More specifically, PLC 104 determines whether power source 14 is providing power to the SOE test interface 10. If so, operation proceeds to step 280. At step 280, the instantaneous voltage is designated as the previous voltage and operation proceeds to step 230. Otherwise, if power source 14 is not providing power to SOE test interface 10, operation ends at step 290.

After completing a test cycle, the time stamp data stored in the time stamp portion 122 of memory 106 is analyzed. The time stamp data may be analyzed to verify that the number of events detected and recorded during the test cycle matches an expected number of events. For example, using a five minute test cycle and selecting program 58 designated as number 6, the total number of events expected is 48,000 (5 minutes x 60 seconds/minute x 160 events/second). PLC 104 verifies the exact number of events by comparing the number of events recorded during a given simulation against the total number of events expected, i.e. 48,000. If PLC 104 determines that the exact number of events does not equal the total number of events expected, this discrepancy may indicate that the test interface 10 may not be operating at an adequate velocity, or that software application 103 failed to detect and record a signal, i.e. SER 100 is not properly synchronized or malfunctioned. However, if the exact number of events equals the total number of events, the SER 100 being tested, and its software application 103, may be reliable and sufficiently robust.

The time stamp data may also be analyzed to validate software application 103 as reliable and sufficiently robust by comparing against the precise SOE test interface 10 generated signals and verifying there is one millisecond of separation between output channels. When there is one millisecond of separation between output channels, SER 100 and its software application 103 may be properly functioning and synchronized. If there isn't a millisecond of separation between output channels, SER 100 and its software application 103 may not be functioning properly.

The time stamp data may also be analyzed to resolve sequences of input signals as to their exact relationship in time. If the time difference between events is not compatible with precision input waveforms 60 generated by SOE test interface 10, then SER 100 and its software application 103 may not be properly functioning or synchronized. However, if the time differences are compatible, then SER 100 and its software application 103 may be properly functioning and synchronized. Thus, a software-based SER 100 is determined to be reliable and sufficiently robust when the number of events recorded equals the number of events expected, there is a one millisecond separation between output channels and the time difference between events is compatible with precision input waveforms 60.

In each embodiment, the above-described SOE test interface provides a method for establishing the reliability and robustness of software-based sequence of event recorders by verifying proper synchronization and functioning. More specifically, in each embodiment an SOE test interface generates signals with precision and frequency stability that are transmitted into a sequence of event recorder for processing. The sequence of event recorder detects, records and time stamps changes in the input signal, thus creating a database that may be analyzed to determine whether a sequence of event recorder is properly synchronized and functioning. Accordingly, system performance and component useful life are each facilitated to be enhanced in a cost effective and reliable manner.

An exemplary embodiment of an SOE test interface is described above in detail. The test interface is not limited to use with the specific circuit embodiment described herein, but rather, the test interface can be utilized independently and separately from other test interface components described herein. Moreover, the invention is not limited to the embodiments of the test interface described above in detail. Rather, other variations of test interface embodiments may be utilized within the spirit and scope of the claims.

While the invention has been described in terms of various specific embodiments, those skilled in the art will recognize that the invention can be practiced with modification within the spirit and scope of the claims.

## Claims

1. A method for verifying the reliability and robustness of sequence of event recorders (100), said method comprising:
transmitting a number of precise signals (60) to a software based sequence of event recorder (100);
detecting a number of voltage changes and recording the number of voltage changes; and
comparing the number of precise signals (60) against the number of voltage changes.

2. A method in accordance with Claim 1 further comprising assigning a time stamp (250) to each of the number of events.

3. A method in accordance with Claim 1 or Claim 2 wherein detecting a number of events further comprises comparing (240) an instantaneous voltage against a previous voltage.

4. A method in accordance with any preceding Claim further comprising generating each of the number of precise signals (60) using a sequence of event test interface (10).

5. A method in accordance with any preceding Claim wherein transmitting a number of precise signals (60) further comprises transmitting a global positioning system signal.

6. A sequence of event test interface (10) comprising:
a circuit (24) comprising a plurality of electronic devices and a plurality of programs (58), when executed each of the plurality of programs causes said circuit to generate a number of precise signals (60) having one millisecond between output channels.

7. A sequence of event test interface (10) in accordance with Claim 6 further comprising a sequence of event recorder (100) coupled to said sequence of event test interface.

8. A sequence of event test interface (10) in accordance with Claim 6 or Claim 7 wherein said number of precise signals (60) defines a periodic waveform.

9. A sequence of event recorder testing system for verifying proper functioning and synchronization of a sequence of event recorder (100), said system comprising:
a circuit (24) comprising a plurality of electronic devices and a plurality of programs (58); and
a sequence of event recorder (100) comprising a controller (104) and a memory (106), said sequence of event recorder coupled to said circuit (24) such that when one of said plurality of programs is selected a time stamp database is defined.

10. A system in accordance with Claim 9 wherein said time stamp database comprises a plurality of time stamps used for determining synchronization of said sequence of event recorder (100).

11. A system in accordance with Claim 9 or Claim 10 wherein each of said plurality of programs (58) causes said circuit (24) to generate a periodic waveform.

12. A system in accordance with Claim 9 wherein said sequence of event recorder (100)detects a number of events and records said number of events.
